# EUROPEAN PATENT SPECIFICATION

(11) **EP 3 695 561 B1**
(45) Date of publication and mention of the grant of the patent: **27.04.2022**
(21) Application number: 17822558.7
(22) Date of filing: 01.12.2017
(51) Int. Cl.: H04L 9/30, H04L 9/08

(54) **SECURE PROVISIONING OF DATA TO CLIENT DEVICE**
SICHERE BEREITSTELLUNG VON DATEN AN EINE CLIENT-VORRICHTUNG
FOURNITURE SÉCURISÉE DE DONNÉES À UN DISPOSITIF CLIENT

(43) Date of publication of application: 19.08.2020
(73) Proprietor: Huawei Technologies Co., Ltd., Longgang District Shenzhen, Guangdong 518129 (CN)
(72) Inventor: SOVIO, Sampo, 16440 Kista (SE); LI, Qiming, 16440 Kista (SE); LAITINEN, Pekka, 16440 Kista (SE); LIAN, Gang, 16440 Kista (SE); XIE, Meilun, 16440 Kista (SE); FANG, Xiwen, 16440 Kista (SE); SHAN, Zhihua, 16440 Kista (SE)
(74) Representative: Epping - Hermann - Fischer
(86) International application number: PCT/EP2017/081203
(87) International publication number: WO 2019/105571

(56) References cited:
- EP-A1- 2 582 085
- WO-A1-2014/200496
- LEDERER CHRISTIAN ET AL: "Energy-Efficient Implementation of ECDH Key Exchange for Wireless Sensor Networks", 1 September 2009 (2009-09-01), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047426028, ISSN: 0302-9743 ISBN: 978-3-642-16065-3 abstract Sections:1, 1.1, 1.2, 2 and 2.1; page 112 - page 118

## Description

### TECHNICAL FIELD

The present application relates to the field of cryptography, and more particularly to secure provisioning of data to a client device, and related devices, methods and computer programs.

### BACKGROUND

Data may need to be provisioned to mobile and wearable devices during device manufacturing. Such data may include various asset data, including but not limited to: device key pairs, other cryptographic key material, digital certificates, security policies, device identifiers and credentials. Device key pairs are typically required e.g. to enable various security services offered by the mobile/wearable device. Additionally/alternatively, such data may include executable code, e.g. a Trusted Application (TA). The provisioned data is typically protected in some manner by the mobile/wearable device's secure hardware.

As an example, during device manufacturing at the factory, a device key pair may be generated and its public key certified by enrolling a device certificate for it. Both the device key pair and the device certificate may be placed in a secure location in the device to enable the usage of the private key to be tightly controlled. Typically, the device key pair can be used only for predefined use cases when the device is with an end-user. These use cases include e.g. device attestation in which the device can sign an attestation to prove that a certain parameters are valid for the device. Another example is key attestation where a key pair is generated by a secure environment in the device, and the device key pair is then used to attest that the key pair in question is really generated in and protected by the secure environment of the device.

However, provisioning of data (such as device keys or device key pairs and the like) in a client device during device manufacturing can have security issues, such as how to encrypt the data to be provisioned so that only the target client device is able to decrypt the data.

WO 2014/200496 A1 discloses technologies for securely pairing a first computing device with a second computing device, the technologies include the first computing device to generate a session message key based on a key exchange with the second computing device. The first computing device receives a message including a hardware key certificate, a cryptographically-signed communication, and a message authentication code from the second computing device. The cryptographically-signed communication is signed with a private hardware key of the second computing device. The first computing device validates the message authentication code, the certificate, and the signature received from the second computing device. After validation, the first computing device identifies a user of the second computing device based on user-identifying data received from the second computing device.

EP 2582085 A1 discloses methods, systems, and computer programs for using an implicit certificate. In some implementations, an identifier for an entity is obtained. A first cryptographic pair that includes a first private value and a first public value is generated. A second cryptographic pair that includes a second private value and a second public value is generated. Based on the first public value and the identifier for the entity, an implicit certificate IC is generated at a first computing device. Based on the implicit certificate IC, the first private value, and the second private value, a private key for the entity is generated at the first computing device. The implicit certificate IC is then sent with the second public value from the first computing device to the second computing device. The implicit certificate IC can be used, for example, to generate or verify digital signatures, to encrypt or decrypt messages, etc.

The paper "Energy-Efficient Implementation of ECDH Key Exchange for Wireless Sensor Networks" from Lederer Christian et al discusses elliptic curve cryptography, in particular elliptic curve Diffie-Hellman key exchange.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object of the diclosure to provide improved secure provisioning of data to a client device. The foregoing and other objects are achieved by the features of the independent claims. Further implementation forms are apparent from the dependent claims, the description and the figures.

According to a first aspect, a secure server device is provided. The secure server device comprises an interface configured to obtain a public key of a provisioning asymmetric cryptographic key pair, the provisioning asymmetric cryptographic key pair having been generated based on a first symmetric cryptographic key of a client device class identifier, wherein the first symmetric cryptographic key is the same first symmetric cryptographic key for all client devices with the same class identifier. The secure server device further comprises a processor configured to utilize the obtained public key of the provisioning asymmetric cryptographic key pair in generation of a second symmetric cryptographic key, and utilize the generated second symmetric cryptographic key in encryption of data to be provisioned to one or more client devices associated with the class identifier. The interface is further configured to send the encrypted data to be provisioned to one or more of the client devices associated with the class identifier. The embodiment allows a non-trusted manufacturing facility equipped with the secure server device to establish a secure data provisioning channel from the secure server device to trusted hardware in client devices, thereby avoiding security issues associated with provisioning of data in the client device during device manufacturing.

In a further implementation form of the first aspect, the processor is further configured to generate an ephemeral asymmetric cryptographic key pair, and to generate the second symmetric cryptographic key based on the obtained public key of the provisioning asymmetric cryptographic key pair and a private key of the generated ephemeral asymmetric cryptographic key pair using a predetermined key-agreement protocol, and the interface is further configured to send a public key of the generated ephemeral asymmetric cryptographic key pair to the one or more of the client devices associated with the class identifier. Using the private key of the ephemeral asymmetric cryptographic key pair together with the public key of the provisioning asymmetric cryptographic key pair allows a secure way of establishing a shared secret (i.e. the second symmetric cryptographic key) between the secure server device and the client device.

In a further implementation form of the first aspect, the data to be provisioned comprises at least one of cryptographic key material or executable code.

In a further implementation form of the first aspect, the provisioning asymmetric cryptographic key pair comprises an elliptic curve key pair or a Rivest-Shamir-Adleman key pair. Using the elliptic curve key pair or the Rivest-Shamir-Adleman key pair as the provisioning asymmetric cryptographic key pair allows further improvements in security for the generation of the second symmetric cryptographic key.

In a further implementation form of the first aspect, the predetermined key-agreement protocol comprises a Diffie-Hellman key-agreement protocol. Using a key-agreement protocol such as the Diffie-Hellman key-agreement protocol allows further improvements in security for the generation of the second symmetric cryptographic key.

In a further implementation form of the first aspect, the Diffie-Hellman key-agreement protocol comprises an elliptic curve Diffie-Hellman key-agreement protocol. Using the elliptic curve Diffie-Hellman key-agreement protocol allows further improvements in security for the generation of the second symmetric cryptographic key.

In a further implementation form of the first aspect, the secure server device further comprises a hardware security module. Using a hardware security module in the secure server device allows a secure and certified environment against physical and logical attacks.

According to a second aspect, a client device is provided. The client device comprises a secure storage configured to store a first symmetric cryptographic key of a client device class identifier associated with the client device, wherein the first symmetric cryptographic key is the same first symmetric cryptographic key for all client devices with the same class identifier. The client device further comprises a transceiver configured to receive from a secure server device encrypted data to be provisioned to the client device. The client device further comprises a processor configured to obtain a private key of a provisioning asymmetric cryptographic key pair, the provisioning asymmetric cryptographic key pair having been generated at the client device based on the stored first symmetric cryptographic key, utilize the obtained private key of the provisioning asymmetric cryptographic key pair in generation of a second symmetric cryptographic key, and utilize the generated second symmetric cryptographic key in decryption of the encrypted data to be provisioned. The embodiment allows a secure data provisioning channel to be established between trusted hardware in the client device and a non-trusted manufacturing facility equipped with the secure server device, thereby avoiding security issues associated with provisioning of data in the client device during manufacturing of the client device.

In a further implementation form of the second aspect, the transceiver is further configured to receive from the secure server device a public key of an ephemeral asymmetric cryptographic key pair, and the processor is further configured to generate the second symmetric cryptographic key based on the private key of the generated provisioning asymmetric cryptographic key pair and the received public key of the ephemeral asymmetric cryptographic key pair using a predetermined key-agreement protocol. Using the public key of the ephemeral asymmetric cryptographic key pair together with the private key of the provisioning asymmetric cryptographic key pair allows a secure way of establishing a shared secret (i.e. the second symmetric cryptographic key) between the client device and the secure server device.

In a further implementation form of the second aspect, the client device further comprises a trusted execution environment configured to perform cryptographic operations. Use of trusted execution environment allows class secret and provisioning key derivation to be protected in the client devices.

According to a third aspect, a method is provided. The method comprises obtaining, by a secure server device, a public key of a provisioning asymmetric cryptographic key pair, the provisioning asymmetric cryptographic key pair having been generated based on a first symmetric cryptographic key of a client device class identifier, wherein the first symmetric cryptographic key is the same first symmetric cryptographic key for all client devices with the same class identifier. The method further comprises utilizing, by the secure server device, the obtained public key of the provisioning asymmetric cryptographic key pair in generation of a second symmetric cryptographic key. The method further comprises utilizing, by the secure server device, the generated second symmetric cryptographic key in encryption of data to be provisioned to one or more client devices associated with the class identifier. The method further comprises sending the encrypted data to be provisioned from the secure server device to one or more of the client devices associated with the class identifier.

According to a fourth aspect, a computer program is provided. The computer program comprises program code configured to perform the method according to the third aspect, when the computer program is executed on a computing device.

According to a fifth aspect, a method is provided. The method comprises receiving, at a client device from a secure server device, encrypted data to be provisioned to the client device, wherein the first symmetric cryptographic key is the same first symmetric cryptographic key for all client devices with the same class identifier. The method further comprises obtaining, by the client device, a private key of a provisioning asymmetric cryptographic key pair, the provisioning asymmetric cryptographic key pair having been generated by the client device based on a first symmetric cryptographic key of a client device class identifier associated with the client device, the first symmetric cryptographic key stored at a secure storage of the client device. The method further comprises utilizing, by the client device, the obtained private key of the provisioning asymmetric cryptographic key pair in generation of a second symmetric cryptographic key. The method further comprises utilizing, by the client device, the generated second symmetric cryptographic key in decryption of the encrypted data to be provisioned.

According to a sixth aspect, a computer program is provided. The computer program comprises program code configured to perform the method according to the fifth aspect, when the computer program is executed on a computing device.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1A is a block diagram illustrating a secure server device according to an embodiment;
Fig. 1B is a block diagram illustrating a secure server device according to another embodiment;
Fig. 1C is a block diagram illustrating a client device according to an embodiment;
Fig. ID is a block diagram illustrating a client device according to another embodiment;
Fig. 2 is a diagram illustrating a system according to an embodiment;
Fig. 3A is a diagram illustrating methods according to an embodiment;
Fig. 3B is a diagram illustrating a method according to another embodiment; and
Fig. 3C is a flow diagram illustrating another method according to yet another embodiment.

In the following, identical reference signs refer to identical or at least functionally equivalent features.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilized and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

Asymmetric cryptography (also known as public key cryptography) refers to a cryptographic technique that involves a pair of keys linked with each other, i.e. a public key and a private key. The public key may be distributed widely, wheras the private key is only known by its owner. Any person can encrypt a message using the public key of the owner (i.e. receiver of the message), but such an encrypted message can only be decrypted with the receiver's private key. Furthermore, the public key can used for authentication, i.e. to verify by anyone that the owner of the corresponding private key sent the message.

Symmetric cryptography refers to a cryptographic technique that involves the use of the same cryptographic key for both encryption of plaintext and decryption of ciphertext. In other words, the cryptographic key of the symmetric cryptography represents a shared secret between two or more parties.

As described in more detail below, the secure server devices 100a, 100b will be utilized in provisioning data to the client devices 110a, 110b during device manufacturing. Such data may include various asset data, including but not limited to: device keys or device key pairs, other cryptographic key material, digital certificates, security policies, device identifiers and credentials. These device keys/key pairs are typically required e.g. to enable various security services offered by the mobile/wearable device. Additionally/alternatively, data to be provisioned may include executable code, e.g. a Trusted Application (TA). These device keys/key pairs (or other data to be provisioned) may be generated using e.g. a cryptographic programming interface, such as that provided by a hardware security module 103a, 103b.

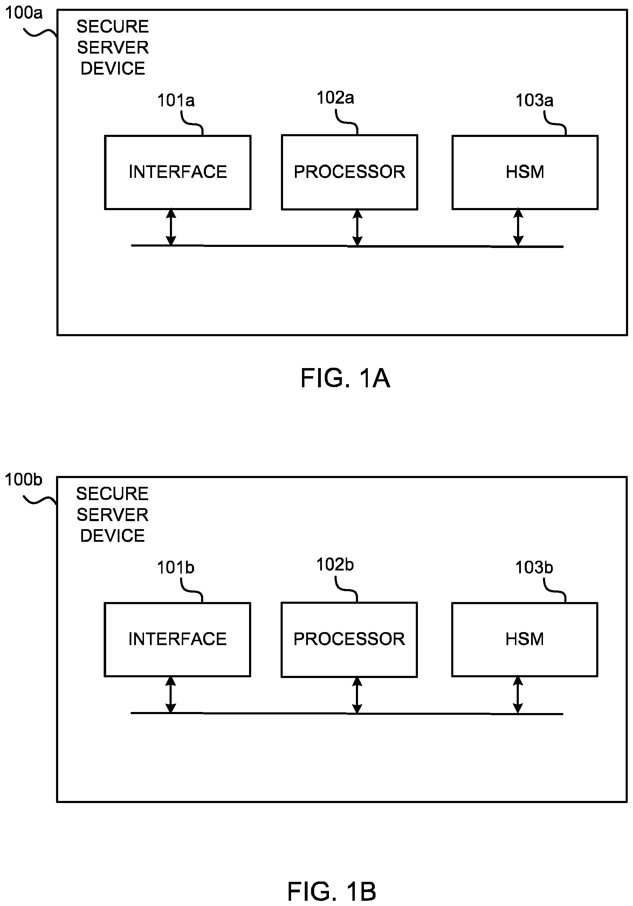

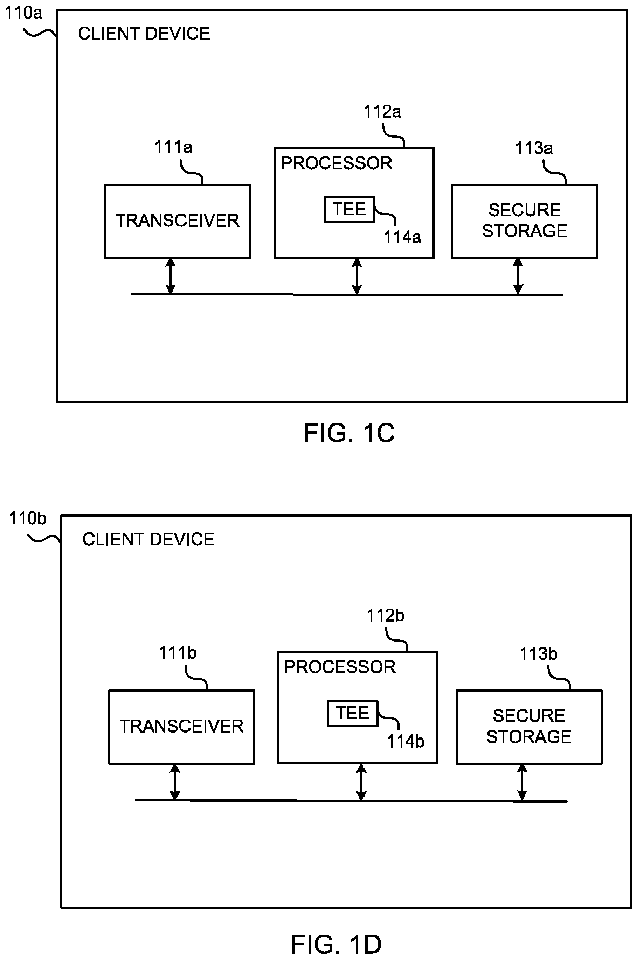

In the following, example embodiments of secure server devices 100a and 100b and client devices 110a and 110b are described based on Figs. 1A, 1B, 1C and ID.

Fig. 1A shows a secure server device 100a which comprises an interface 101a, a processor 102a, and a optionally a hardware security module (HSM) 103a.

The secure server device 100a may comprise e.g. a manufacturing server that is used in manufacturing client devices, such as mobile devices and/or wearable devices. In other words, the secure server device 100a may be deployed at a manufacturing line for client devices. Here, the term "secure" refers to a trusted server device 100a comprising an element or unit that allows secure handling of sensitive or private data. The secure server device 100a may be implemented e.g. by the inclusion of the hardware security module 103a. Typically, the term "hardware security module" refers to a physical computing device that safeguards and manages digital keys and provides cryptoprocessing. Such a module may provide a secure and certified environment against physical and logical attacks and may comprise e.g. a plug-in card or an external device that attaches directly to the secure server device 100a.

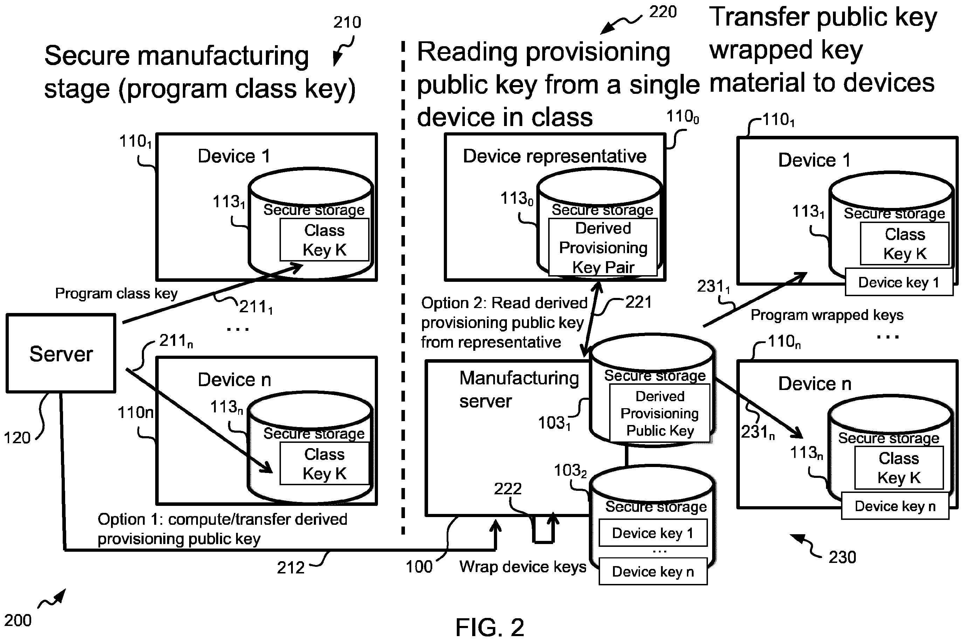

Herein, each client device belongs to a class of client devices. For example, client devices with the same hardware specifications may share the same class. However, in some embodiments it is possible for hardware with different specifications to also have the same class identifier. A client device class is uniquely identified by an associated client device class identifier. Furthermore, each client device class identifier is assigned its own class key (K). The class key K is a symmetric cryptographic key that is the same for all the hardware with the same class identifier. In other words, the class key is a secret cryptographic key shared by all the hardware with the same class manufactured by the hardware vendor. The class key K is typically written into a secure memory area of the client device (such as the secure storage 113a, 113b of Figs. 1C and ID) that is accessible by secure hardware (such as the trusted execution environment 114a, 114b of Figs. 1C and ID) of the client device. Normal application code cannot access the class key K. The generation of the class key K and its programming into the client devices 110a, 110b may be performed e.g. by the server 120 of Fig. 2.

The interface 101a is configured to obtain (e.g. retrieve or receive) a public key of a provisioning asymmetric cryptographic key pair (PKP). The provisioning asymmetric cryptographic key pair PKP comprises a private key (dₚ) and the public key (Qₚ).

The provisioning asymmetric cryptographic key pair PKP may have been derived from the class key K using a suitable method. For example, in an embodiment, the class key K may be used to derive an elliptic curve (EC) key pair. In another embodiment, the class key K may be used to derive a Rivest-Shamir-Adleman (RSA) key pair. In other words, the provisioning asymmetric cryptographic key pair may comprise e.g. an elliptic curve key pair or a Rivest-Shamir-Adleman key pair.

The derivation of the provisioning asymmetric cryptographic key pair PKP can be done e.g. by the chip manufacturer (e.g. the server 120), or by the client device manufacturer (e.g. the secure server device 100a). The derivation or generation of the provisioning asymmetric cryptographic key pair will be described in more detail in connection with Fig. 2. In other words, the provisioning asymmetric cryptographic key pair has been generated based on the first symmetric cryptographic key of the client device class identifier.

The processor 102a may optionally be configured to generate an ephemeral asymmetric cryptographic key pair. The ephemeral asymmetric cryptographic key pair comprises a private key (de) and a public key (Qₑ). The processor 102a may include e.g. one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The processor 102a is further configured to establish a shared secret, i.e. a provisioning session key (PSK) between the secure server device 100a and the client device 110a. In other words, the processor 102a is further configured to utilize the obtained public key Qₚ of the provisioning asymmetric cryptographic key pair in the generation of a second symmetric cryptographic key (i.e. provisioning session key PSK).

For example, when the ephemeral asymmetric cryptographic key pair has been generated, this may be implemented so that the processor 102a generates the second symmetric cryptographic key PSK based on the obtained public key Qₚ of the provisioning asymmetric cryptographic key pair and the private key de of the generated ephemeral asymmetric cryptographic key pair, e.g. by using a predetermined key-agreement protocol. The key-agreement protocol may comprise a Diffie-Hellman key-agreement protocol, such as an elliptic curve Diffie-Hellman (ECDH) key-agreement protocol. In other words, the ephemeral key pair may be used together with the provisioning key pair PKP to agree on a shared secret PSK using e.g. a Diffie-Hellman key agreement, such as the ECDH.

The processor 102a is further configured to utilize the generated second symmetric cryptographic key PSK in encryption of the data to be provisioned to the client device 110a. For example, the processor 102a may utilize the generated second symmetric cryptographic key PSK to securely wrap the data to be provisioned. After the encryption, the interface 101a is further configured to send the encrypted data to be provisioned to the client device 110a. When the ephemeral asymmetric cryptographic key pair has been generated, the interface 101a may optionally be configured to also send the public key Qₑ of the generated ephemeral asymmetric cryptographic key pair to the client device 110a.

Fig. 1B shows a secure server device 100b which comprises an interface 101b, a processor 102b, and a optionally a hardware security module (HSM) 103b.

Similar to the embodiment of Fig. 1A, the processor 102b is configured to utilize the obtained public key Qₚ of the provisioning asymmetric cryptographic key pair (PKP) in generation of the second symmetric cryptographic key (provisioning session key, PSK), optionally utilizing the ephemeral asymmetric cryptographic key pair and a suitable key-agreement protocol as in the embodiment of Fig. 1A.

However, in contrast to the embodiment of Fig. 1A, the processor 102b is configured to randomly generate a third symmetric cryptographic key (or in other words, a shared key encryption key, KEK).

Further in contrast to the embodiment of Fig. 1A, the processor 102b is configured to encrypt the data to be provisioned to the client device 110b with the randomly generated third symmetric cryptographic key KEK. As described above, in the embodiment of Fig. 1A, the data to be provisioned was instead encrypted or wrapped with the second symmetric cryptographic key PSK.

Further in contrast to the embodiment of Fig. 1A, the processor 102b is configured to use the second symmetric cryptographic key PSK to encrypt the third symmetric cryptographic key KEK after its use to encrypt the data to be provisioned. The thus encrypted third symmetric cryptographic key KEK (or in other words, an encrypted provisioning key, PEK) may be still further encrypted by the processor 102b with white-box cryptography.

Further in contrast to the embodiment of Fig. 1A, the interface 101b is further configured to send also the encrypted third symmetric cryptographic key PEK to the client device 110b.

Otherwise, the elements, features and parameters (such as the various cryptographic keys, identifiers, and data to be provisioned) of the secure server device 100a and the secure server device 100b are identical or at least functionally equivalent so their descriptions are not repeated here in detail.

Fig. 1C shows a client device 110a which comprises an transceiver 111a, a processor 112a, a secure storage 113a, and optionally secure hardware, such as a trusted execution environment (TEE) 114a.

The client device 110a may be any of various types of mobile and/or wearable devices used directly by an end user entity and capable of communication in a wireless network, such as user equipment (UE). Such devices include but are not limited to smartphones, tablet computers, smart watches, lap top computers, Internet-of-Things (IoT) devices etc.

Furthermore, the client device 110a may comprise secure hardware, such as a trusted execution environment (TEE) 114a for performing cryptographic operations, such as encryption and/or decryption related operations. Typically, the trusted execution environment refers to a secure area in a processor (such as the processor 112a), or a processor (such as the processor 112a) executing in a secure mode, or the like. It may be used e.g. to guarantee that code and data loaded inside are isolated from other applications and protected with respect to confidentiality and integrity. The trusted execution environment 114a may be integrated with the secure storage 113a, i.e. only the TEE may be allowed to access the secure storage 113a containing device secrets.

The secure storage 113a is configured to store the first symmetric cryptographic key (i.e. class key K described above in more detail) of the client device class identifier associated with the client device 110a.

It is to be noted that the various cryptographic keys, identifiers, and data to be provisioned used by the client device 110a are identical or at least functionally equivalent to those used by the secure server device 100a so their descriptions are not repeated here in detail.

The transceiver 111a is configured to receive from the secure server device 100a the encrypted data to be provisioned to the client device 110a.

The processor 112a is configured to obtain the private key dₚ of the provisioning asymmetric cryptographic key pair PKP. The provisioning asymmetric cryptographic key pair PKP is generated or has been previously generated at the client device 110a based on the first symmetric cryptographic key K stored in the secure storage 113a. If the data provisioning has been done before for the client device 110a, then the provisioning asymmetric cryptographic key pair PKP has been generated during this first provisioning. In an example, the client device 110a may store the generated provisioning asymmetric cryptographic key pair PKP e.g. to the secure storage 113a at the first data provisioning, and the during the following data provisionings the generated provisioning asymmetric cryptographic key pair PKP may be obtained from the secure storage 113a. In other words, the generation of the provisioning asymmetric cryptographic key pair PKP may be performed only once per client device 110a.

The processor 112a is further configured to utilize the obtained private key dₚ of the provisioning asymmetric cryptographic key pair PKP in generation of the second symmetric cryptographic key PSK. For example, this may be implemented so that the transceiver 111a receives the public key Qₑ of the ephemeral asymmetric cryptographic key pair from the secure server device 100a, and the processor 112a generates the second symmetric cryptographic key PSK based on the private key dₚ of the generated provisioning asymmetric cryptographic key pair PKP and the received public key Qₑ of the ephemeral asymmetric cryptographic key pair using a predetermined key-agreement protocol. As before, the key-agreement protocol may comprise the Diffie-Hellman key-agreement protocol, such as the elliptic curve Diffie-Hellman (ECDH) key-agreement protocol.

The processor 112a is further configured to utilize the generated second symmetric cryptographic key PSK in decryption of the encrypted data to be provisioned that was received from the secure server device 100a.

Fig. ID shows a client device 110b which comprises an transceiver 111b, a processor 112b, a secure storage 113b, and optionally secure hardware, such as a trusted execution environment (TEE) 114b.

In contrast to the embodiment of Fig. 1C, the transceiver 111b is also configured to receive the encrypted third symmetric cryptographic key PEK from the secure server device 100b. Further in contrast to the embodiment of Fig. 1C, the processor 112b is configured to utilize the generated second symmetric cryptographic key PSK in decryption of the encrypted third symmetric cryptographic key (PEK) thereby obtaining the decrypted third symmetric cryptographic key (KEK), whereas in the embodiment of Fig. 1C the PSK was used to decrypt the encrypted data to be provisioned.

Further in contrast to the embodiment of Fig. 1C, the processor 112b is configured to utilize the decrypted third symmetric cryptographic key KEK in the decryption of the data to be provisioned.

Otherwise, the elements, features and parameters (such as the various cryptographic keys, identifiers, and data to be provisioned) of the client device 110a and the client device 110b are identical or at least functionally equivalent so their descriptions are not repeated here in detail.

Fig. 2 shows a diagram illustrating a system 200 according to an embodiment. The system 200 comprises a server 120 (e.g. a chip manufacturer server), a secure server device 100, a client device 110₀, and client devices 110₁-110ₙ.

In an embodiment, the elements, features and parameters (such as the various cryptographic keys, identifiers, and data to be provisioned) of the secure server device 100 are identical or at least functionally equivalent to those of the secure server device 100a, and the elements, features and parameters of the client devices 110₁-110ₙ are identical or at least functionally equivalent to those of the client devices 110a. In another embodiment, the elements, features and parameters of the secure server device 100 are identical or at least functionally equivalent to those of the secure server device 100b, and the elements, features and parameters of the client devices 110₁-110ₙ are identical or at least functionally equivalent to those of the client device 110b. Accordingly, their descriptions are not repeated here in detail.

As shown in Fig. 2, a secure manufacturing stage 210 involves the class key K being securely programmed to the client devices 110₁-110ₙ in operations 211₁ to 211ₙ. The secure manufacturing stage 210 needs to be done once per client device class. As discussed above, the class key K is typically written into secure memory areas of the client devices 110₁-110ₙ (such as the secure storage 113₁-113ₙ) that is accessible by secure hardware (such as the trusted execution environment) of the client devices 110₁-110ₙ. Normal application code cannot access the class key K.

Stages 220 and 230 involve secure transfer of assets/data to be provisioned from the secure server device 100 to the client devices 110₁-110ₙ. Stages 220 and 230 need to be done once per client device.

The derivation of the PKP can be done e.g. by a chip manufacturer, or by a client device manufacturer using a single client device 113o belonging to the specific class. In the former case, the chip manufacturer derives the PKP in a secure environment (e.g. server 120) in which the class key K is available. In the latter case, the client device manufacturer may load a special trusted PKP-generation application to a single client device 113₀. This trusted application has access to the class key K and derives the PKP in this client device 113₀. In both cases, the key derivation needs to be done only once per device class. The public key part the PKP is securely transferred (operation 212 or 221) to a trusted server (i.e. secure server device 100) that makes use of it accordingly.

The PKP is then used to wrap/encrypt (operation 222) an asset in the trusted server 100, the wrapped/encrypted asset is transferred (operations 231₁ to 231ₙ) to the client devices 110₁-110ₙ, and the client devices 110₁-110ₙ unwrap/decrypt the asset with the PKP. In addition to transferring the wrapped/encrypted asset, also additional security parameters may need to be transferred, including the public key Qₑ of the ephemeral key pair, potential initialization vectors (IVs) used during wrapping/encrypting the assets, and/or plain data (such as a device certificate chain).

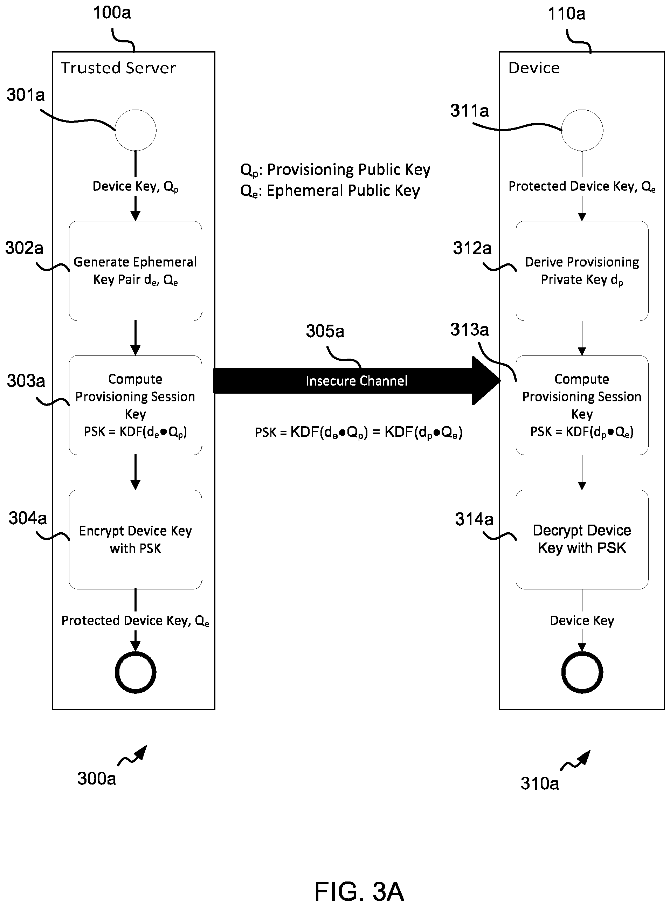

Fig. 3A shows a diagram 300a of an example method according to an embodiment.

The method 300a comprises obtaining, by a secure server device, a public key of a provisioning asymmetric cryptographic key pair PKP, the provisioning asymmetric cryptographic key pair PKP having been generated based on a first symmetric cryptographic key K of a client device class identifier, step 301a.

The method 300a further comprises generating an ephemeral asymmetric cryptographic key pair by the secure server device, step 302a.

The method 300a further comprises generating a second symmetric cryptographic key PSK based on the obtained public key Qₚ of the provisioning asymmetric cryptographic key pair and a private key dₑ of the generated ephemeral asymmetric cryptographic key pair using a predetermined key-agreement protocol, step 303a.

The method 300a further comprises utilizing, by the secure server device, the generated second symmetric cryptographic key in encryption of data to be provisioned to one or more client devices associated with the class identifier, step 304a.

The method 300a further comprises sending the encrypted data to be provisioned and the public key Qₑ of the generated ephemeral asymmetric cryptographic key pair from the secure server device to one or more of the client devices associated with the class identifier, step 305a.

The method 300a may be performed by the secure server device 100a. Further features of the method 300a directly result from the functionalities of the secure server device 100a. The method 300a can be performed by a computer program.

Fig. 3A further shows a diagram 310a of another example method according to same the embodiment.

The method 310a comprises receiving, at the client device from the secure server device, the public key Qₑ of the ephemeral asymmetric cryptographic key pair and the encrypted data to be provisioned to the client device, step 311a.

The method 310a further comprises obtaining, by the client device, the private key dₚ of the provisioning asymmetric cryptographic key pair, step 312a. The provisioning asymmetric cryptographic key pair has been generated by the client device based on the first symmetric cryptographic key (class key K) of the client device class identifier associated with the client device, which first symmetric cryptographic key is stored at the secure storage of the client device.

The method 310a further comprises generating, by the client device, the second symmetric cryptographic key PSK based on the private key dₚ of the generated provisioning asymmetric cryptographic key pair and the received public key Qₑ of the ephemeral asymmetric cryptographic key pair using a predetermined key-agreement protocol, step 313a.

The method 310a further comprises utilizing, by the client device, the generated second symmetric cryptographic key PSK in decryption of the encrypted data to be provisioned, step 314a.

The method 310a may be performed by the client device 110a. Further features of the method 310a directly result from the functionalities of the client device 110a. The method 310a can be performed by a computer program.

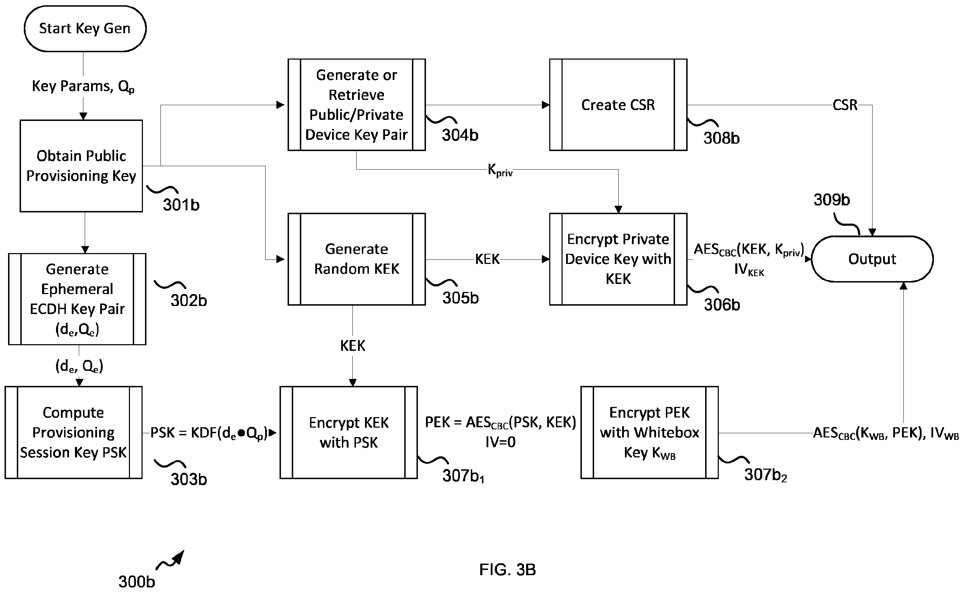

Fig. 3B shows a diagram of an example method 300b according to another embodiment.

The method 300b comprises obtaining, by a secure server device, a public key of a provisioning asymmetric cryptographic key pair PKP, the provisioning asymmetric cryptographic key pair PKP having been generated based on a first symmetric cryptographic key K of a client device class identifier, step 301b.

The method 300b further comprises generating an ephemeral asymmetric cryptographic key pair by the secure server device, step 302b.

The method 300b further comprises generating a second symmetric cryptographic key PSK based on the obtained public key Qₚ of the provisioning asymmetric cryptographic key pair and a private key dₑ of the generated ephemeral asymmetric cryptographic key pair using a predetermined key-agreement protocol, step 303b.

The method 300b further comprises obtaining (generating or retrieving) data to be provisioned (private device key Kₚᵣᵢᵥ) to one or more client devices associated with the class identifier, step 304b.

The method 300b further comprises randomly generating a third symmetric cryptographic key KEK by the secure server device, step 305b.

The method 300b further comprises encrypting, by the secure server device, the data to be provisioned with the randomly generated third symmetric cryptographic key KEK, step 306b.

The method 300b further comprises utilizing, by the secure server device, the generated second symmetric cryptographic key PSK in encryption of the third symmetric cryptographic key (KEK), thus obtaining the encrypted third symmetric cryptographic key (PEK), step 307b₁.

Optionally, the method 300b further comprises utilizing, by the secure server device, white-box cryptography in the encryption of the generated third symmetric cryptographic key, step 307b₂.

Optionally, the method 300b further comprises creating a certificate signing request (CSR), step 308b.

The method 300b further comprises sending the encrypted data to be provisioned and the encrypted third symmetric cryptographic key from the secure server device to one or more of the client devices associated with the class identifier, step 309b.

The method 300b may be performed by the secure server device 100b. Further features of the method 300b directly result from the functionalities of the secure server device 100b. The method 300b can be performed by a computer program.

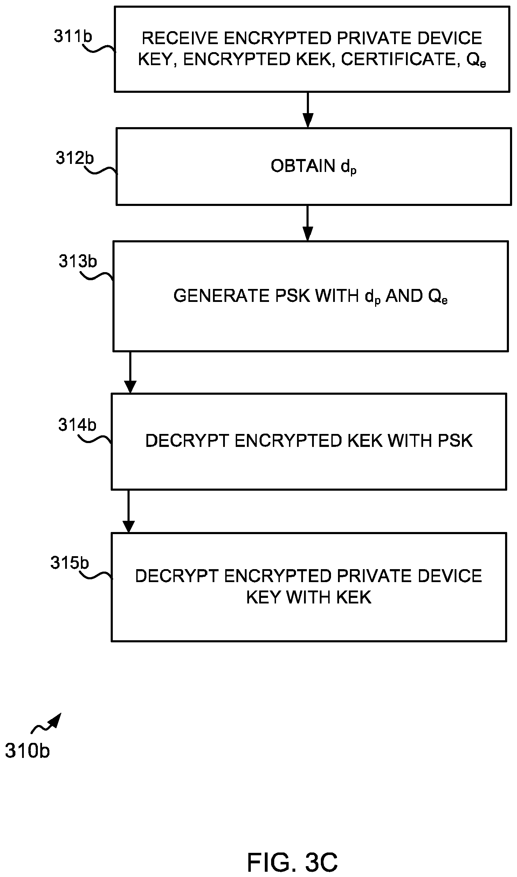

Fig. 3C shows a flow diagram 310b of an example method according to yet another embodiment.

The method 310b comprises receiving, at the client device from the secure server device, the public key Qₑ of the ephemeral asymmetric cryptographic key pair, the encrypted third symmetric cryptographic key (PEK), and the encrypted data to be provisioned to the client device, step 311b.

The method 310b further comprises obtaining, by the client device, the private key dₚ of the provisioning asymmetric cryptographic key pair, step 312b. The provisioning asymmetric cryptographic key pair has been generated by the client device based on the first symmetric cryptographic key (class key K) of the client device class identifier associated with the client device, which first symmetric cryptographic key is stored at the secure storage of the client device.

The method 310b further comprises generating, by the client device, the second symmetric cryptographic key PSK based on the private key dₚ of the generated provisioning asymmetric cryptographic key pair and the received public key Qₑ of the ephemeral asymmetric cryptographic key pair using a predetermined key-agreement protocol, step 313b.

The method 310b further comprises utilizing, by the client device, the generated second symmetric cryptographic key PSK (and optionally white-box cryptography) in decryption of an encrypted third symmetric cryptographic key (PEK) to obtain the decrypted third symmetric cryptographic key (KEK), step 314b.

The method 310b further comprises utilizing the decrypted third symmetric cryptographic key (KEK) in the decryption of the data to be provisioned, step 315b.

The method 310b may be performed by the client device 110b. Further features of the method 310b directly result from the functionalities of the client device 110b. The method 310b can be performed by a computer program.

In other words, the process of Figs. 3B and 3C may start with the generation (or retrieval) of the device key pair, the generation of the shared key encryption key (KEK), and the generation of the ephemeral key pair (EKP) that is to be used with ECHD. First, the device key pair may be used to generate a certificate signing request (CSR) that can be e.g. in PKCS#10 format. The CSR may be used to enroll a device certificate from a public key infrastructure (PKI) system (i.e., from a certification authority). Then, the KEK is used wrap/encrypt the private device key. Then, the ephemeral key pair's private key Qₑ is used together with PKP's public key dₚ to derive the PSK (e.g. by using the ECDH key agreement). The PSK is then used to wrap/encrypt the KEK resulting in the encrypted provisioning key (PEK). An exclusive or (XOR) may be used for this (i.e. OneTimePad, OTP), but other encryption schemes may be used as well. Finally, the PEK is encrypted using white-box encryption. The device certificate (with the whole certificate chain), encrypted private key, and encrypted KEK (with PSK and white-box encryption) form a data blob that will be used to provision the device key pair with the device certificate chain to the client device. The data blob (i.e. output) may also contain additional data fields, such as initialization vectors (IVs) used in different wrapping/encryption steps, and the public key Qₑ of the ephemeral EPK.

After decrypting the data to be provisioned (e.g. the private device key), the client device may store the data to be provisioned and optionally the device certificate (chain) into a secure location and limit it use as appropriate.

The diclosure allows a non-trusted manufacturing facility equipped with the secure server device to establish a secure data provisioning channel from the secure server device to trusted hardware in client devices, thereby avoiding security issues associated with provisioning of data in the client device during device manufacturing, such as how to encrypt the data to be provisioned so that only the target client device is able to decrypt the data, and how to authenticate the target client device.

In the diclosure, the class key K is used to generate a provisioning key pair (PKP), where the private key part is only known by the client device, and the public key part is transferred to the secure server device. The PKP is then used e.g. with Elliptic Curve Diffie-Hellman (ECDH) method to derive a provisioning shared secret (PSK), which can be used to secure the transfer of the data to be provisioned from the secure server device to the client device. Since only the client device has access to the private key part of the PKP, only it can obtain the asset in plain text. This process also implicitly authenticates the client device as the secure server device knows that the corresponding private key is only available in authenticated client devices.

Furthermore, a single public key per device class needs to be derived and/or obtained, which will be imported to the secure server device. Furthermore, the diclosure is readily deployable since chip manufacturers typically pre-program class secrets in their chips. Furthermore, key derivation can be diversified to allow multiple provisioning keys for multiple use cases. Furthermore, even if one provisioning session key is compromised, it does not allow access to any other device keys.

The functionality described herein can be performed, at least in part, by one or more computer program product components such as software components. According to an embodiment, the client devices 110a, 110b and/or secure server devices

100a, 100b comprise a processor configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Fieldprogrammable Gate Arrays (FPGAs), Program-specific Integrated Circuits (ASICs), Program-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

## Claims

1. A secure server device (100a), comprising:
an interface (101a) configured to obtain a public key of a provisioning asymmetric cryptographic key pair, said provisioning asymmetric cryptographic key pair having been generated based on a first symmetric cryptographic key of a client device class identifier, wherein the first symmetric cryptographic key is the same first symmetric cryptographic key for all client devices with the same class identifier; and
a processor (102a) configured to utilize said obtained public key of said provisioning asymmetric cryptographic key pair in generation of a second symmetric cryptographic key, and utilize said generated second symmetric cryptographic key in encryption of data to be provisioned to one or more client devices associated with said class identifier,
wherein the interface (101a) is further configured to send the encrypted data to be provisioned to one or more of the client devices associated with said class identifier.

2. The secure server device (100a) according to claim 1, wherein the processor (102a) is further configured to generate an ephemeral asymmetric cryptographic key pair, and to generate the second symmetric cryptographic key based on said obtained public key of said provisioning asymmetric cryptographic key pair and a private key of said generated ephemeral asymmetric cryptographic key pair using a predetermined key-agreement protocol, and the interface (101a) is further configured to send a public key of said generated ephemeral asymmetric cryptographic key pair to the one or more of the client devices associated with said class identifier.

3. The secure server device (100a) according to claim 1 or 2, wherein the data to be provisioned comprises at least one of cryptographic key material or executable code.

4. The secure server device (100a) according to any of claims 1 to 3, wherein the provisioning asymmetric cryptographic key pair comprises an elliptic curve key pair or a Rivest-Shamir-Adleman key pair.

5. The secure server device (100a) according to any of claims 2 to 4, wherein the predetermined key-agreement protocol comprises a Diffie-Hellman key-agreement protocol.

6. The secure server device (100a) according to claim 5, wherein the Diffie-Hellman key-agreement protocol comprises an elliptic curve Diffie-Hellman key-agreement protocol.

7. The secure server device (100a) according to any of claims 1 to 6, further comprising a hardware security module (103a).

8. A client device (110a), comprising:
a secure storage (113a) configured to store a first symmetric cryptographic key of a client device class identifier associated with the client device (110a), wherein the first symmetric cryptographic key is the same first symmetric cryptographic key for all client devices with the same class identifier;
a transceiver (111a) configured to receive from a secure server device encrypted data to be provisioned to the client device (110a); and
a processor (112a) configured to obtain a private key of a provisioning asymmetric cryptographic key pair, said provisioning asymmetric cryptographic key pair having been generated at the client device (110a) based on the stored first symmetric cryptographic key, utilize said obtained private key of said provisioning asymmetric cryptographic key pair in generation of a second symmetric cryptographic key, and utilize said generated second symmetric cryptographic key in decryption of the encrypted data to be provisioned.

9. The client device (110a) according to claim 8, wherein the transceiver (111a) is further configured to receive from the secure server device a public key of an ephemeral asymmetric cryptographic key pair, and the processor (112a) is further configured to generate the second symmetric cryptographic key based on the private key of said generated provisioning asymmetric cryptographic key pair and the received public key of said ephemeral asymmetric cryptographic key pair using a predetermined key-agreement protocol.

10. The client device (110a) according to claim 8 or 9, further comprising a trusted execution environment (114a) configured to perform cryptographic operations.

11. A method (300a), comprising:
obtaining (301a), by a secure server device, a public key of a provisioning asymmetric cryptographic key pair, said provisioning asymmetric cryptographic key pair having been generated based on a first symmetric cryptographic key of a client device class identifier, wherein the first symmetric cryptographic key is the same first symmetric cryptographic key for all client devices with the same class identifier;
utilizing (303a), by the secure server device, said obtained public key of said provisioning asymmetric cryptographic key pair in generation of a second symmetric cryptographic key;
utilizing (304a), by the secure server device, said generated second symmetric cryptographic key in encryption of data to be provisioned to one or more client devices associated with said class identifier; and
sending (305a) the encrypted data to be provisioned from the secure server device to one or more of the client devices associated with said class identifier.

12. A computer program comprising program code configured to perform a method according to claim 11, when the computer program is executed on a computing device.

13. A method (310a), comprising:
receiving (311a), at a client device from a secure server device, encrypted data to be provisioned to the client device;
obtaining (312a), by the client device, a private key of a provisioning asymmetric cryptographic key pair, said provisioning asymmetric cryptographic key pair having been generated by the client device based on a first symmetric cryptographic key of a client device class identifier associated with the client device, said first symmetric cryptographic key stored at a secure storage of the client device, wherein the first symmetric cryptographic key is the same first symmetric cryptographic key for all client devices with the same class identifier;
utilizing (313a), by the client device, said obtained private key of said provisioning asymmetric cryptographic key pair in generation of a second symmetric cryptographic key; and
utilizing (314a), by the client device, said generated second symmetric cryptographic key in decryption of the encrypted data to be provisioned.

14. A computer program comprising program code configured to perform a method according to claim 13, when the computer program is executed on a computing device.

## Patentansprüche

1. Sichere Servervorrichtung (100a), umfassend:
eine Schnittstelle (101a), die konfiguriert ist, um einen öffentlichen Schlüssel eines asymmetrischen kryptografischen Bereitstellungsschlüsselpaares zu erhalten, wobei das asymmetrische kryptografische Bereitstellungsschlüsselpaar basierend auf einem ersten symmetrischen kryptografischen Schlüssel einer Clientvorrichtung-Klassenkennung erzeugt wurde, wobei der erste symmetrische kryptografische Schlüssel der gleiche erste symmetrische kryptografische Schlüssel für alle Clientvorrichtungen mit der gleichen Klassenkennung ist; und
einen Prozessor (102a), der konfiguriert ist, um den erhaltenen öffentlichen Schlüssel des asymmetrischen kryptografischen Bereitstellungsschlüsselpaares bei der Erzeugung eines zweiten symmetrischen kryptografischen Schlüssels verwendet und den erzeugten zweiten symmetrischen kryptografischen Schlüssel bei der Verschlüsselung von Daten verwendet, die für eine oder mehrere Clientvorrichtungen bereitgestellt werden sollen, die der Klassenkennung zugeordnet sind,
wobei die Schnittstelle (101a) ferner konfiguriert ist, um die bereitzustellenden verschlüsselten Daten an eine oder mehrere der Clientvorrichtungen zu senden, die der Klassenkennung zugeordnet sind.

2. Sichere Servervorrichtung (100a) nach Anspruch 1, wobei der Prozessor (102a) ferner konfiguriert ist, um ein kurzlebiges asymmetrisches kryptografisches Schlüsselpaar zu erzeugen und den zweiten symmetrischen kryptografischen Schlüssel basierend auf dem erhaltenen öffentlichen Schlüssel des asymmetrischen kryptografischen Schlüsselpaares und eines privaten Schlüssels des erzeugten kurzlebigen asymmetrischen kryptografischen Schlüsselpaares unter Verwendung eines vorbestimmten Schlüsselabstimmungsprotokolls zu erzeugen, und die Schnittstelle (101a) ferner konfiguriert, um einen öffentlichen Schlüssel des erzeugten kurzlebigen asymmetrischen kryptografischen Schlüsselpaares an die eine oder mehrere der Clientvorrichtungen zu senden, die der Klassenkennung zugeordnet sind.

3. Sichere Servervorrichtung (100a) nach Anspruch 1 oder 2, wobei die bereitzustellenden Daten mindestens eines von kryptografischem Schlüsselmaterial oder ausführbarem Code umfassen.

4. Sichere Servervorrichtung (100a) nach einem der Ansprüche 1 bis 3, wobei das asymmetrische kryptografische Bereitstellungsschlüsselpaar ein Schlüsselpaar mit einer elliptischen Kurve oder ein Rivest-Shamir-Adleman-Schlüsselpaar umfasst.

5. Sichere Servervorrichtung (100a) nach einem der Ansprüche 2 bis 4, wobei das vorbestimmte Schlüsselvereinbarungsprotokoll ein Diffie-Hellman-Schlüsselvereinbarungsprotokoll umfasst.

6. Sichere Servervorrichtung (100a) nach Anspruch 5, wobei das Diffie-Hellman-Schlüsselvereinbarungsprotokoll ein Diffie-Hellman-Schlüsselvereinbarungsprotokoll mit einer elliptischen Kurve umfasst.

7. Sichere Servervorrichtung (100a) nach einem der Ansprüche 1 bis 6, die ferner ein Hardware-Sicherheitsmodul (103a) umfasst.

8. Clientvorrichtung (110a), umfassend:
einen sicheren Speicher (113a), der konfiguriert ist, um einen ersten symmetrischen kryptografischen Schlüssel einer Clientvorrichtung-Klassenkennung zu speichern, die der Clientvorrichtung (110a) zugeordnet ist, wobei der erste symmetrische kryptografische Schlüssel der gleiche erste symmetrische kryptografische Schlüssel für alle Clientvorrichtungen mit derselben Klassenkennung ist;
einen Sendeempfänger (111a), der konfiguriert ist, um von einer sicheren Servervorrichtung verschlüsselte Daten zu empfangen, die der Clientvorrichtung (110a) bereitgestellt werden sollen; und
einen Prozessor (112a), der konfiguriert ist, um einen privaten Schlüssel eines asymmetrischen kryptografischen Bereitstellungsschlüsselpaares zu erhalten, wobei das asymmetrische kryptografische Bereitstellungsschlüsselpaar basierend auf dem gespeicherten ersten symmetrischen kryptografischen Schlüssel auf der Clientvorrichtung (110a) erzeugt wurde, um den erhaltenen privaten Schlüssel des asymmetrischen kryptografischen Schlüsselpaares bei der Erzeugung eines zweiten symmetrischen kryptografischen Schlüssels zu verwenden, und um den erzeugten zweiten symmetrischen kryptografischen Schlüssel bei der Entschlüsselung der verschlüsselten Daten, die bereitgestellt werden sollen, zu verwenden.

9. Clientvorrichtung (110a) nach Anspruch 8, wobei der Sendeempfänger (111a) ferner konfiguriert ist, um von der sicheren Servervorrichtung einen öffentlichen Schlüssel eines kurzlebigen asymmetrischen kryptografischen Schlüsselpaares zu empfangen, und der Prozessor (112a) ferner konfiguriert ist, um den zweiten symmetrischen kryptografischen Schlüssel basierend auf dem privaten Schlüssel des erzeugten asymmetrischen kryptografischen Schlüsselpaares und des empfangenen öffentlichen Schlüssels des kurzlebigen asymmetrischen kryptografischen Schlüsselpaares unter Verwendung eines vorbestimmten Schlüsselabstimmungsprotokolls zu erzeugen.

10. Clientvorrichtung (110a) nach Anspruch 8 oder 9, ferner umfassend eine vertrauenswürdige Ausführungsumgebung (114a), die konfiguriert ist, um kryptografische Operationen durchzuführen.

11. Verfahren (300a), umfassend:
Erhalten (301a) eines öffentlichen Schlüssels eines asymmetrischen kryptografischen Bereitstellungsschlüsselpaares durch eine sichere Servervorrichtung, wobei das asymmetrische kryptografische Bereitstellungsschlüsselpaar basierend auf einem ersten symmetrischen kryptografischen Schlüssel einer Clientvorrichtung-Klassenkennung erzeugt wurde, wobei der erste symmetrische kryptografische Schlüssel der gleiche erste symmetrische kryptografische Schlüssel für alle Clientvorrichtungen mit der gleichen Klassenkennung ist.
Nutzen (303a) des erhaltenen öffentlichen Schlüssels des bereitgestellten asymmetrischen kryptografischen Schlüsselpaares durch die sichere Servervorrichtung bei der Erzeugung eines zweiten symmetrischen kryptografischen Schlüssels;
Nutzen (304a) des erzeugten zweiten symmetrischen kryptografischen Schlüssels durch die sichere Servervorrichtung bei der Verschlüsselung von Daten, die an eine oder mehrere Clientvorrichtung bereitzustellen sind, die der Klassenkennung zugeordnet sind; und
Senden (305a) der von der sicheren Servervorrichtung bereitzustellenden verschlüsselten Daten an eine oder mehrere der Clientvorrichtungen, die der Klassenkennung zugeordnet sind.

12. Computerprogramm, das Programmcode umfasst, der dazu konfiguriert ist, ein Verfahren nach Anspruch 11 durchzuführen, wenn das Computerprogramm auf einer Rechenvorrichtung ausgeführt wird.

13. Verfahren (310a), umfassend:
Empfangen (311a) verschlüsselter Daten, die an die Clientvorrichtung bereitzustellen sind, an einer Clientvorrichtung von einer sicheren Servervorrichtung;
Erhalten (312a) eines privaten Schlüssels eines asymmetrischen kryptografischen Bereitstellungsschlüsselpaares durch die Clientvorrichtung, wobei das asymmetrische kryptografische Bereitstellungsschlüsselpaar durch die Clientvorrichtung basierend auf einem ersten symmetrischen kryptografischen Schlüssel einer Clientvorrichtung-Klassenkennung, die der Clientvorrichtung zugeordnet ist, erzeugt wurde, wobei der erste symmetrische kryptografische Schlüssel in einem sicheren Speicher der Clientvorrichtung gespeichert ist, wobei der erste symmetrische kryptografische Schlüssel derselbe erste symmetrische kryptografische Schlüssel für alle Clientvorrichtungen mit derselben Klassenkennung ist;
Nutzen (313a) des erhaltenen öffentlichen Schlüssels des bereitgestellten asymmetrischen kryptografischen Schlüsselpaares durch die sichere Servervorrichtung bei der Erzeugung eines zweiten symmetrischen kryptografischen Schlüssels;
Nutzen (314a) des erzeugten zweiten symmetrischen kryptografischen Schlüssels durch die Clientvorrichtung beim Entschlüsseln der bereitzustellenden verschlüsselten Daten.

14. Computerprogramm, das Programmcode umfasst, der dazu konfiguriert ist, ein Verfahren nach Anspruch 13 durchzuführen, wenn das Computerprogramm auf einer Rechnervorrichtung ausgeführt wird.

## Revendications

1. Dispositif serveur sécurisé (100a), comprenant :
une interface (101a) configurée pour obtenir une clé publique d'une paire de clés cryptographiques asymétriques de fourniture, ladite paire de clés cryptographiques asymétriques de fourniture ayant été générée sur la base d'une première clé cryptographique symétrique d'un identifiant de classe de dispositif client, dans lequel la première clé cryptographique symétrique est la même première clé cryptographique symétrique pour tous les dispositifs client avec le même identifiant de classe ; et
un processeur (102a) configuré pour utiliser ladite clé publique obtenue de ladite paire de clés cryptographiques asymétriques de fourniture dans la génération d'une seconde clé cryptographique symétrique, et utiliser ladite seconde clé cryptographique symétrique générée dans le cryptage de données à fournir à un ou plusieurs dispositifs client associés audit identifiant de classe,
dans lequel l'interface (101a) est en outre configurée pour envoyer les données cryptées à fournir à un ou plusieurs des dispositifs client associés audit identifiant de classe.

2. Dispositif serveur sécurisé (100a) selon la revendication 1, dans lequel le processeur (102a) est en outre configuré pour générer une paire de clés cryptographiques asymétriques éphémères, et pour générer la seconde clé cryptographique symétrique sur la base de ladite clé publique obtenue de ladite paire de clés cryptographiques asymétriques de fourniture et d'une clé privée de ladite paire de clés cryptographiques asymétriques éphémères générée à l'aide d'un protocole d'accord de clé prédéterminé, et l'interface (101a) est en outre configurée pour envoyer une clé publique de ladite paire de clés cryptographiques asymétriques éphémères générée aux un ou plusieurs des dispositifs client associés audit identifiant de classe.

3. Dispositif serveur sécurisé (100a) selon la revendication 1 ou 2, dans lequel les données à fournir comprennent au moins l'un d'un matériel de clé cryptographique ou d'un code exécutable.

4. Dispositif serveur sécurisé (100a) selon l'une quelconque des revendications 1 à 3, dans lequel la paire de clés cryptographiques asymétriques de fourniture comprend une paire de clés à courbe elliptique ou une paire de clés Rivest-Shamir-Adleman.

5. Dispositif serveur sécurisé (100a) selon l'une quelconque des revendications 2 à 4, dans lequel le protocole d'accord de clé prédéterminé comprend un protocole d'accord de clé Diffie-Hellman.

6. Dispositif serveur sécurisé (100a) selon la revendication 5, dans lequel le protocole d'accord de clé Diffie-Hellman comprend un protocole d'accord de clé Diffie-Hellman à courbe elliptique.

7. Dispositif serveur sécurisé (100a) selon l'une quelconque des revendications 1 à 6, comprenant en outre un module de sécurité matériel (103a).

8. Dispositif client (110a), comprenant :
une mémoire sécurisée (113a) configurée pour stocker une première clé cryptographique symétrique d'un identifiant de classe de dispositif client associé au dispositif client (110a), dans lequel la première clé cryptographique symétrique est la même première clé cryptographique symétrique pour tous les dispositifs client avec le même identifiant de classe ;
un émetteur-récepteur (111a) configuré pour recevoir en provenance d'un dispositif serveur sécurisé des données cryptées à fournir au dispositif client (110a) ; et
un processeur (112a) configuré pour obtenir une clé privée d'une paire de clés cryptographiques asymétriques de fourniture, ladite paire de clés cryptographiques asymétriques de fourniture ayant été générée au niveau du dispositif client (110a) sur la base de la première clé cryptographique symétrique stockée, utiliser ladite clé privée obtenue de ladite paire de clés cryptographiques asymétriques de fourniture dans la génération d'une seconde clé cryptographique symétrique, et utiliser ladite seconde clé cryptographique symétrique générée dans le décryptage des données cryptées à fournir.

9. Dispositif client (110a) selon la revendication 8, dans lequel l'émetteur-récepteur (111a) est en outre configuré pour recevoir en provenance du dispositif serveur sécurisé une clé publique d'une paire de clés cryptographiques asymétriques éphémères, et le processeur (112a) est en outre configuré pour générer la seconde clé cryptographique symétrique sur la base de la clé privée de ladite paire de clés cryptographiques asymétriques de fourniture générée et de la clé publique reçue de ladite paire de clés cryptographiques asymétriques éphémères à l'aide d'un protocole d'accord de clé prédéterminé.

10. Dispositif client (110a) selon la revendication 8 ou 9, comprenant en outre un environnement d'exécution sécurisé (114a) configuré pour effectuer des opérations cryptographiques.

11. Procédé (300a), comprenant :
l'obtention (301a), par un dispositif serveur sécurisé, d'une clé publique d'une paire de clés cryptographiques asymétriques de fourniture, ladite paire de clés cryptographiques asymétriques de fourniture ayant été générée sur la base d'une première clé cryptographique symétrique d'un identifiant de classe de dispositif client, dans lequel la première clé cryptographique symétrique est la même première clé cryptographique symétrique pour tous les dispositifs client avec le même identifiant de classe ; et
l'utilisation (303a), par le dispositif serveur sécurisé, de ladite clé publique obtenue de ladite paire de clés cryptographiques asymétriques de fourniture dans la génération d'une seconde clé cryptographique symétrique ;
l'utilisation (304a), par le dispositif serveur sécurisé, de ladite seconde clé cryptographique symétrique générée dans le cryptage de données à fournir à un ou plusieurs dispositifs client associés audit identifiant de classe ; et
l'envoi (305a) des données cryptées à fournir depuis le dispositif serveur sécurisé à un ou plusieurs des dispositifs client associés audit identifiant de classe.

12. Programme informatique comprenant un code de programme configuré pour exécuter un procédé selon la revendication 11, lorsque le programme informatique est exécuté sur un ordinateur.

13. Procédé (310a), comprenant :
la réception (311a), au niveau d'un dispositif client en provenance d'un dispositif serveur sécurisé, de données cryptées à fournir au dispositif client ;
l'obtention (312a), par le dispositif client, d'une clé privée d'une paire de clés cryptographiques asymétriques de fourniture, ladite paire de clés cryptographiques asymétriques de fourniture ayant été générée par le dispositif client sur la base d'une première clé cryptographique symétrique d'un identifiant de classe de dispositif client associé au dispositif client, ladite première clé cryptographique symétrique étant stockée dans une mémoire sécurisée du dispositif client, dans lequel la première clé cryptographique symétrique est la même première clé cryptographique symétrique pour tous les dispositifs client avec le même identifiant de classe ;
l'utilisation (313a), par le dispositif client, de ladite clé privée obtenue de ladite paire de clés cryptographiques asymétriques de fourniture dans la génération d'une seconde clé cryptographique symétrique ; et
l'utilisation (314a), par le dispositif client, de ladite seconde clé cryptographique symétrique générée dans le décryptage des données cryptées à fournir.

14. Programme informatique comprenant un code de programme configuré pour exécuter un procédé selon la revendication 13, lorsque le programme informatique est exécuté sur un dispositif informatique.
